# FASCICULE DE BREVET EUROPEEN

(11) **EP 1 106 463 B1**
(45) Date de publication et mention de la délivrance du brevet: **11.07.2007**
(21) Numéro de dépôt: 00420244.6
(22) Date de dépôt: 27.11.2000
(51) Int. Cl.: B60T 11/16, B60T 7/06, B62L 3/02

(54) **Dispositif pour doser la décélération d'un véhicule**
Vorrichtung zur Dosierung der Fahrzeugverzögerung
Device for dosing the vehicle deceleration

(30) Priorité: 06.12.1999 FR 9915706
(43) Date de publication de la demande: 13.06.2001
(73) Titulaire: SA Beringer, 42940 Chatelneuf (FR)
(72) Inventeur: Beringer, Gilbert, 42940 Chatelneuf (FR)
(74) Mandataire: Thivillier, Patrick

(56) Documents cités:
- DE-A- 4 434 254
- US-A- 5 050 381
- US-A- 5 520 068

## Description

L'invention se rattache au secteur technique des dispositifs de freinage pour tous types de véhicules, tels que voitures, motocyclettes, avions...

Une des pièces essentielles d'un dispositif de freinage est constituée par le maître cylindre relié hydrauliquement aux organes de freinage en tant que tels, à disques ou à tambours et accouplés à un ou des organes actionneurs, manoeuvrables à la main ou aux pieds, en fonction du type de véhicule considéré.

Ainsi, de manière essentielle, le maître cylindre de frein comprend un cylindre relié hydrauliquement au circuit de freinage et accouplé à une partie du véhicule. Le cylindre reçoit un piston accouplé à l'organe actionneur, lui-même actionné sur une partie du véhicule. Cet état de la technique peut être illustré par l'enseignement du brevet US 5,050,381, que reflète le préambule de la revendication 1.

L'action de freinage a pour but de créer une décélération du véhicule suivi ou non de l'arrêt total de ce dernier. Notamment, il est apparu important de pouvoir doser la décélération correspondant par exemple au ralentissement nécessaire du véhicule pour aborder un virage. Ce dosage résulte essentiellement du déplacement de l'effort sur l'organe actionneur de freinage (levier ou pédale). Il en résulte une réaction qui est la valeur de la décélération susceptible d'être ressentie de différentes manières par le conducteur. En réalité, cette valeur de la décélération est très difficile à apprécier.

Par exemple, cette valeur de la décélération peut être perçue directement par une sensation du phénomène d'accélération horizontale dans le corps de l'utilisateur, ou directement en intégrant la diminution de la vitesse perçue par le défilement du paysage ou bien encore, indirectement, en appréciant la variation d'assiette du véhicule considéré due à la composante horizontale de l'accélération, le véhicule ayant tendance à plonger de l'avant. Cette réaction est la plus utilisée pour le dosage des freins, mais se trouve entachée d'erreurs. En effet, à décélération égale, la plongée du véhicule, varie en fonction de son chargement, du réglage de la suspension et d'autres phénomènes.

Pour obtenir la décélération recherchée, le conducteur agit sur l'organe de freinage provoquant une réaction de son véhicule. Pour obtenir la réaction désirée, le conducteur est obligé de modifier plusieurs fois l'action exercée sur l'organe de freinage, pour obtenir la décélération souhaitée. Le résultat obtenu n'est donc pas immédiat. Ce temps de réponse est, par conséquent, susceptible de faire perdre de nombreux mètres sur une distance d'arrêt.

Lorsque le conducteur est suffisamment expérimenté et qu'il connaît bien son véhicule, le pilote détermine, par apprentissage, l'effort précis qu'il doit appliquer sur l'organe actionneur, pour obtenir la décélération souhaitée. Dans ce cas, le résultat est instantané, mais la chaîne de commande doit être fidèle. A défaut, le résultat ne sera pas celui escompté par le conducteur.

Il en résulte que le conducteur va donc apprendre à utiliser son système de freinage ou à déterminer expérimentalement la course et l'effort nécessaires sur l'organe actionneur de freinage pour obtenir la décélération souhaitée. Cet apprentissage se fait naturellement et inconsciemment.

Le freinage idéal est donc d'avoir une liaison parfaitement linéaire entre la course de l'organe actionneur et la décélération et entre l'effort exercé sur l'organe actionneur et la décélération.

Depuis de nombreuses années, d'importants progrès techniques dans le domaine du freinage ont été réalisés.

Par contre, aucune amélioration technique significative n'a été apportée au niveau du maître cylindre. Le problème posé dans un maître cylindre considéré comme idéal, est de pouvoir transformer l'effort sur l'organe actionneur en pression dans le circuit de freinage de manière proportionnelle à la montée en pression et au relâchement dudit organe actionneur.

En pratique, la précision du dosage de freinage est largement dégradée par l'apparition de nombreux frottements, notamment au niveau des joints, des articulations sur paliers lisses, des pistons dans l'alésage du cylindre...

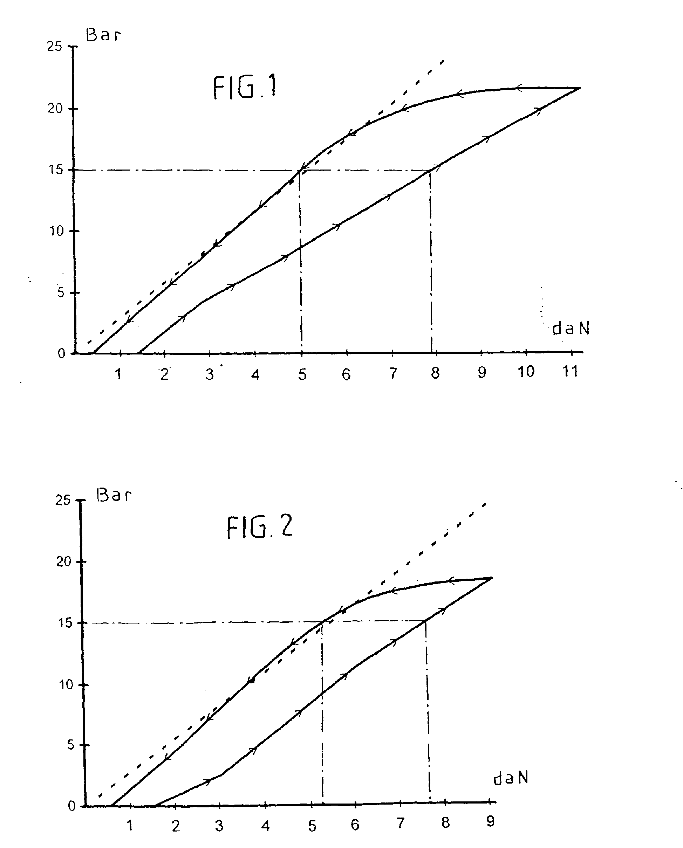

On renvoie aux figures 1 et 2 qui montrent la courbe d'hystérésis résultant des mesures effectuées sur un banc d'essai et correspondant à des maîtres cylindres de conception classique, montés sur des motos de grosses cylindrées.

La figure 1, correspond à un maître cylindre radial, tandis que la figure 2 correspond à maître cylindre axial.

La courbe qui apparaît en traits forts, correspond à la pression mesurée, tandis que la courbe en traits pointillés, correspond à la pression théorique.

Sur ces courbes, en abscisses, sont indiqués en daN, différents efforts exercés sur le levier, tandis qu'en ordonnées, sont indiquées, en bars, les pressions exercées.

Si l'on considère une pression de 15 bars correspondant approximativement à une décélération de 0,7 G, la courbe d'hystérésis met en évidence que les frottements internes nuisent de manière significative à la fidélité des couples efforts - pressions. Il apparaît que sur les deux modèles évalués, l'erreur entre l'effort au levier, et la montée en pression et la descente en pression, peut aller jusqu'à 43 %, dans le cas du maître cylindre axial et jusqu'à 57 %, dans le cas du maître cylindre radial.

A noter que le décalage au départ de la course correspond à un ressort de rappel du piston du maître cylindre, nécessaire pour combattre les frottements en retour.

Ces courbes montrent que le pilote ne peut pas ajuster la décélération avec précision. Surtout, il ne peut pas diminuer la pression dans le circuit, étant donné qu'il devra relâcher de manière importante l'effort, pour diminuer un peu la pression.

Ces problèmes obligent les pilotes de compétitions à pomper sur le levier ou la pédale de frein, afin de pouvoir toujours se recaler sur la courbe de montée en pression, de sorte que la courbe de descente en pression n'est jamais utilisée. Cette technique dite de pompage consiste à exercer un effort sur le levier ou la pédale de freins et à relâcher immédiatement cet effort, cela de manière successive et continue.

Il est claire que cette technique de pilotage n'est pas accessible au conducteur de base qui va se trouver surpris par une décélération sans cesse différente, pour le même effort appliqué au levier ou sur la pédale de frein. Il est donc difficile, voire impossible, de ressentir et de doser correctement le freinage.

Cette non maîtrise du freinage conduit inévitablement à des décélérations inadaptées pouvant avoir des conséquences dommageables, en ayant tendance à augmenter les distances d'arrêts, y compris lorsque le véhicule est équipé d'un système d'anti-blocage des roues.

Le problème étant ainsi clairement posé, et afin de remédier aux inconvénients précités, il est apparu nécessaire de pouvoir éliminer ou à tout le moins de diminuer de manière significative, les frottements directs ou indirects au niveau du maître cylindre.

Le problème étant ainsi posé, il a été conçu et mis au point un dispositif pour doser la décélération d'un véhicule lors d'un effort appliqué sur un organe actionneur d'un maître cylindre de frein conforme aux caractéristiques de la revendication 1.

Il en résulte que les efforts exercés sur le piston par l'organe actionneur sont toujours dans l'axe dudit cylindre afin d'être soumis à aucun effort radial, de sorte que l'effort axial est intégralement converti en pression dans le circuit.

L'invention est exposée ci-après plus en détail à l'aide des dessins annexés, dans lesquels :
Les figures 1 et 2 montrent les courbes d'hystérésis obtenu dans le cas de maîtres cylindres selon l'état de la technique.
La figure 3 montre la courbe d'hystérésis obtenue dans le cas de maître cylindre selon les caractéristiques de l'invention.
Les figures 4, 5 et 6 sont des vues en coupe, à caractère schématique, montrant le montage oscillant du maître cylindre selon les caractéristiques de l'invention, dans le cas où le piston est commandé par un levier articulé (cas d'une motocyclette par exemple) ; à la figure 4 aucun effort n'est exercé sur le levier ; à la figure 5 un effort intermédiaire est exercé sur le levier ; à la figure 6, un effort maximum est exercé sur le levier.
La figure 7 est une vue du type de celle illustrée aux figures 4, 5 et 6 et dans le cas où le piston est assujetti à un organe actionnaire du type pédale (cas d'un véhicule automobile notamment).
La figure 8 est une vue en coupe transversale considérée selon la ligne 8.8 de la figure 6.
La figure 9 est une vue en coupe transversale considérée selon la ligne 9.9 de la figure 6.

Le maître cylindre comprend un cylindre (1) à l'intérieur duquel est monté coaxialement un piston (2). Le cylindre (1) est relié par tout moyen connu et approprié, au circuit hydraulique du système de freinage en tant que tel. Le piston (2) présente des gorges (2a) et (2b) ou autres agencements susceptibles de recevoir des joints d'étanchéité (3). L'éventuel ressort de rappel ou autre du piston (2) n'est pas représenté.

Selon une caractéristique à la base de l'invention, il a été conçu un dispositif pour doser la décélération lors d'un effort appliqué sur un organe actionneur (7) d'un maître cylindre, selon lequel l'extrémité (1a) du cylindre (1), située à l'opposé de l'autre extrémité à partir de laquelle déborde le piston (2), est articulée d'une manière oscillante sur une partie du véhicule tel qu'un carter (4) ou autre, en fonction du type de véhicule considéré. Par exemple, le montage oscillant du cylindre (1), par rapport à l'élément support (4), s'effectue au moyen d'un axe (5) monté en combinaison avec un roulement (6). L'extrémité (1a) constitue un nez arrondi monté entre les deux ailes d'une chape que présente une partie de l'élément support (4). L'ensemble de l'axe (5) avec son roulement (6) est monté transversalement pour assurer l'accouplement oscillant dudit nez (1a) dans la chape dudit élément support (4).

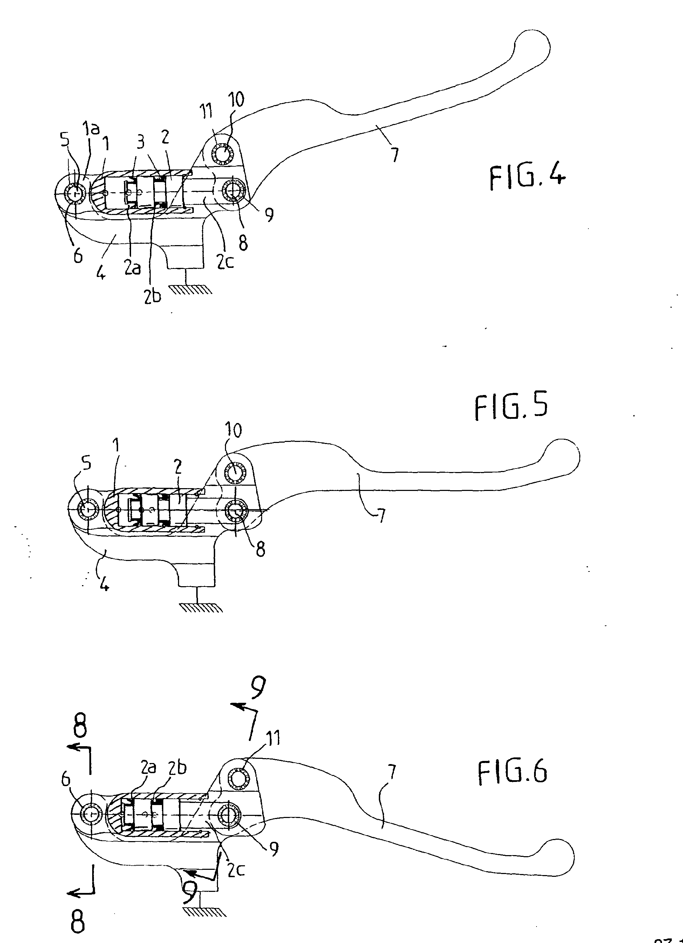

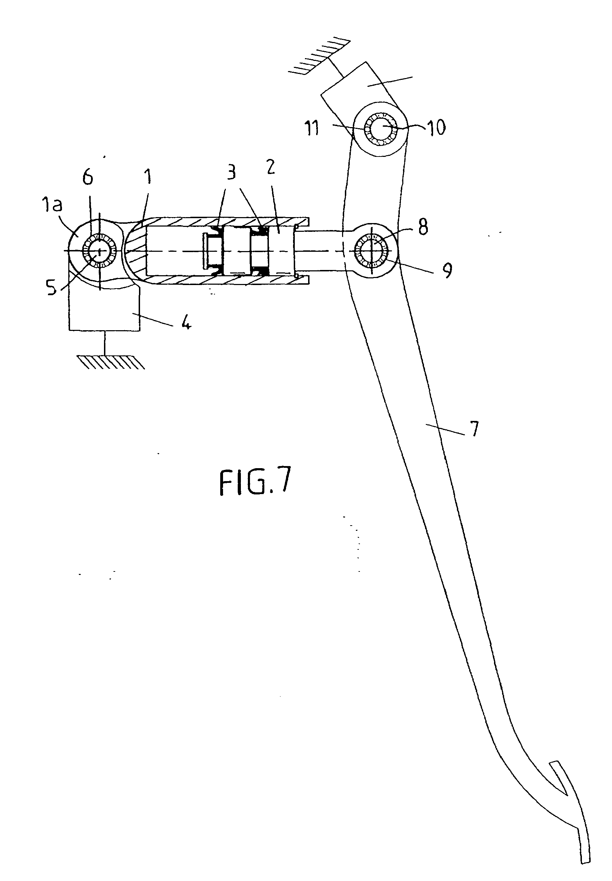

Selon le même principe, la tige (2c) du piston (2), est accouplée de manière articulée à une partie appropriée d'un organe actionneur (7), qui peut être constitué par un levier, dans le cas d'une motocyclette (figures 4, 5 et 6) ou par une pédale, dans le cas d'un véhicule automobile (figure 7). De la même façon que pour le cylindre (1), le montage articulé du piston (2) par rapport à l'organe actionneur (7), s'effectue au moyen d'un axe (8) en combinaison avec un roulement (9). L'organe actionneur (7) est, quant à lui, actionné sur une partie fixe du véhicule considéré, au moyen d'un axe (10), en combinaison avec un roulement (11). Le montage articulé du piston (2) par rapport à l'organe actionneur (7) et de l'organe actionneur (7) par rapport à la partie du véhicule, peut s'effectuer de la même façon que pour le cylindre (1), par des agencements sous forme de chape.

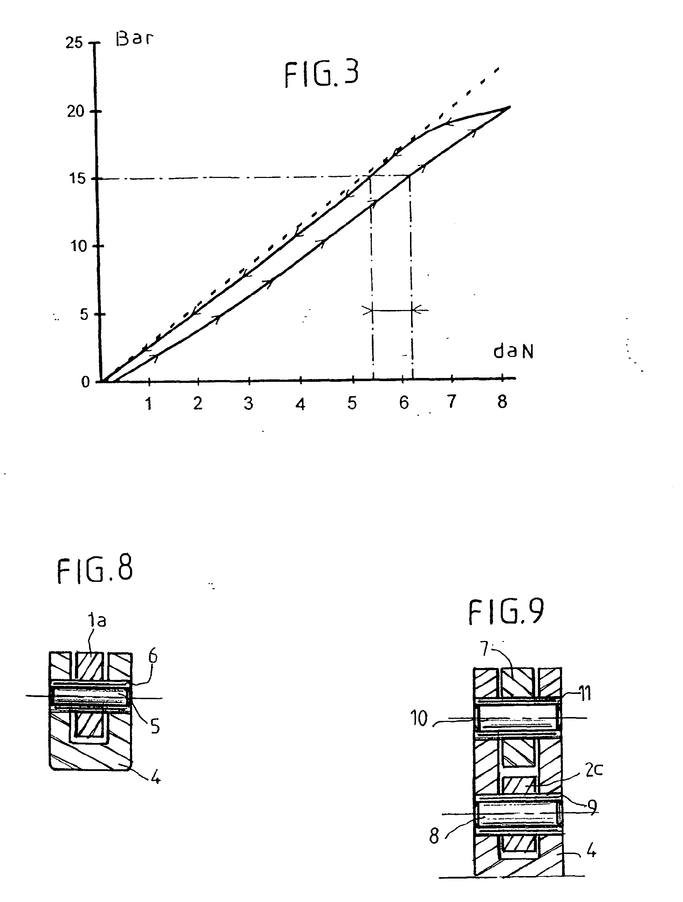

Compte tenu de ces dispositions et comme le montrent notamment les figures 4, 5 et 6, l'effort exercé par le levier (7) (ou la pédale) sur le piston (2), sont transmis de manière coaxiale au cylindre (1), afin que ledit piston ne soit soumis à aucun effort radial. Il en résulte que l'effort axial, est intégralement converti en pression dans le circuit hydraulique. Ce montage oscillant du cylindre notamment, permet donc de supprimer les frottements et d'obtenir comme le montre la figure 3, une courbe d'hystérésis où, comparativement à l'état de la technique, l'erreur de dosage est ramenée à sensiblement 14 %.

Des essais ont ainsi démontrés que selon les caractéristiques de l'invention, il suffit d'exercer un effort d'environ 6,2 daN pour obtenir 15 bars, alors qu'avec les maîtres cylindres, selon l'état de la technique, pour obtenir la même pression de 15 bars, il est nécessaire d'exercer un effort d'environ 7,8 daN.

Compte tenu de ces caractéristiques, il en résulte également, pour l'utilisateur, un retour d'information (ce qui est très important dans le cas d'un pilote de moto) très largement supérieur à un maître cylindre de l'état de la technique. En effet, le frottement plaquettes - disques, génère de légères vibrations qui sont retransmises au maître cylindre, par le liquide de frein.

Selon l'état de la technique, ces vibrations sont amorties par le mouvement de coulissement du piston, alors que de telles vibrations sont directement transmises au niveau du levier, compte tenu des caractéristiques selon l'invention. Le pilote peut ainsi ressentir instantanément et précisément, l'efficacité des freins et ressentir également lorsque le frottement disques - plaquettes est perturbé.

A noter que dans le cas d'une motocyclette, la commande du maître de cylindre du levier peut s'effectuer par l'intermédiaire d'un basculeur susceptible de présenter un système de réglage d'écartement du levier, afin de pouvoir adapter le maître cylindre à chaque taille de la main.

Les avantages ressortent bien de la description.

## Revendications

1. Dispositif pour doser la décélération d'un véhicule lors d'un effort appliqué sur un organe actionneur d'un maître cylindre de frein comprenant :
- un cylindre (1) relié hydrauliquement au circuit de freinage et accouplé à une partie du véhicule ;
- ledit cylindre (1) reçoit un piston (2) dont la tige (2c) est accouplé à un organe actionneur (7) du type levier ou pédale, lui même articulé sur une partie du véhicule ; dans lequel
- l'extrémité (1a) du cylindre (1), située à l'opposé de l'autre extrémité à partir de laquelle déborde le piston (2), est articulée d'une manière oscillante sur une partie (4) du véhicule au moyen d'un premier axe (5);
- la tige (2c) du piston (2), est accouplée de manière articulée à l'organe actionneur (7), au moyen d'un deuxième axe (8), ledit organe actionneur (7) étant articulé sur la partie du véhicule, au moyen d'un troisième axe (10),
**caracterisé en ce que** les premier, deuxième et troisième axes (5, 8, 10) sont montés chacun en combinaison avec un roulement (6, 9, 11).

## Claims

1. A device for adjusting the deceleration of a vehicle when a force is applied to an actuating device of a master brake cylinder comprising:
- a cylinder (1) hydraulically linked to the braking circuit and connected to part of the vehicle;
- said cylinder (1) accommodates a piston (2) the rod of which (2c) is connected to an actuating device (7) of the lever or pedal type which is itself articulated to part of the vehicle; in which
- the end (1a) of cylinder (1), located opposite the other end from which piston (2) projects, is oscillatingly articulated to part (4) of the vehicle by means a first shaft (5);
- rod (2c) of piston (2) is articulatedly connected to actuating device (7) by means of a second shaft (8), said actuating device (7) being articulated on part of the vehicle by means of a third shaft (10)
**characterised in that**:
The first, second and third shafts (5, 8, 10) are each mounted in combination with a bearing (6, 9, 11).

## Patentansprüche

1. Vorrichtung zur Dosierung der Fahrzeugverzögerung, während eine Kraft auf ein Betätigungselement eines Hauptbremszylinders ausgeübt wird, die folgendes aufweist :
- einen Zylinder (1), der mit dem Bremskreis hydraulisch verbunden und an einen Teil des Fahrzeuges angeschlossen ist;
- der Zylinder (1) nimmt einen Kolben (2) auf, dessen Stange (2c) mit einem Hebel oder einem Pedal (7) verbunden ist, der bzw. das wiederum an einem Teil des Fahrzeuges angelenkt ist ; wobei
- das Ende (1a) des Zylinders (1), das gegenüber dem anderen Ende angeordnet ist, von dem aus der Kolben (2) vorsteht, mit Hilfe einer ersten Achse (5) oszillierend an einem Teil (4) des Fahrzeuges angelenkt ist ;
- die Stange (2c) des Kolbens (2) ist mit Hilfe einer zweiten Achse (8) gelenkig mit dem Betätigungselement (7) verbunden, wobei das Betätigungselement (7) mit Hilfe einer dritten Achse (10) an dem Teil des Fahrzeuges angelenkt ist, **dadurch gekennzeichnet, dass** die erste, zweite und dritte Achse (5, 8,10) jeweils in Verbindung mit einer Rolle (6, 9,11) montiert sind.
